**Europäisches Patentamt**

**European Patent Office**

**Office européen des brevets**

(19)

(11) Numéro de publication : **0 382 592 B1**

# (12) FASCICULE DE BREVET EUROPEEN

(45) Date de publication du fascicule du brevet :
**15.02.95 Bulletin 95/07**

(51) Int. Cl.⁶ : **G09B 29/10,** G01C 21/22

(21) Numéro de dépôt : **90400179.9**

(22) Date de dépôt : **23.01.90**

---

(54) **Système d'affichage cartographique universel, notamment pour la visualisation, sur un fond de carte approprié d'un objet repéré d'une façon quelconque.**

---

(30) Priorité : **27.01.89 FR 8901006**

(43) Date de publication de la demande :
**16.08.90 Bulletin 90/33**

(45) Mention de la délivrance du brevet :
**15.02.95 Bulletin 95/07**

(84) Etats contractants désignés :
**CH DE DK GB LI NL SE**

(56) Documents cités :
**EP-A- 0 108 689**
**EP-A- 0 242 050**

(73) Titulaire : **THOMSON-CSF**
**173, Boulevard Haussmann**
**F-75008 Paris (FR)**

(72) Inventeur : **Tournadre, André**
**THOMSON-CSF**
**SCPI**
**Cédex 67**
**F-92045 Paris la Défense (FR)**

(74) Mandataire : **Albert, Claude et al**
**THOMSON-CSF**
**SCPI**
**B.P. 329**
**50, rue J.P. Timbaud**
**F-92402 COURBEVOIE CEDEX (FR)**

EP 0 382 592 B1

## Description

Le domaine de l'invention est celui de l'affichage sur un fond de carte, d'objets repérés d'une façon quelconque à la surface terrestre.

Un système tel que décrit dans le préambule de la revendication 1 est connu dans l'art antérieur, par exemple, par le document EP-A-0 242 050.

Plus précisément, l'invention vise à permettre de positionner, sur un jeu de fonds de cartes préexistant, des objets se trouvant en n'importe quel point de la surface terrestre. Cette opération de positionnement, selon l'invention, a vocation à être automatisée. L'automatisation peut ainsi être mise en oeuvre dans des machines de traitement de données, permettant non seulement la localisation de l'objet sur le fond de carte approprié, mais également des opérations de traitement liées à la position de l'objet, par exemple des mesures de distances, ou autres.

De façon préférentielle, mais non limitative, cet affichage est réalisé sur une surface sensiblement plane, telle que celle d'un écran cathodique.

La représentation plane et cartésienne de la surface terrestre est rendue difficile du fait de la "sphéricité" de la terre. Une étude mathématique, réalisée par Mercator au 16ème siècle, résoud le problème dans ses grandes lignes.

Le principe de représentation mis au point par Mercator, (UTM: Universal Transverse Mercator) consiste à effectuer une projection de la surface terrestre sur un cylindre tangent à l'équateur. On considère que cette représentation présente une distorsion acceptable jusqu'à une latitude de plus ou moins 80° environ.

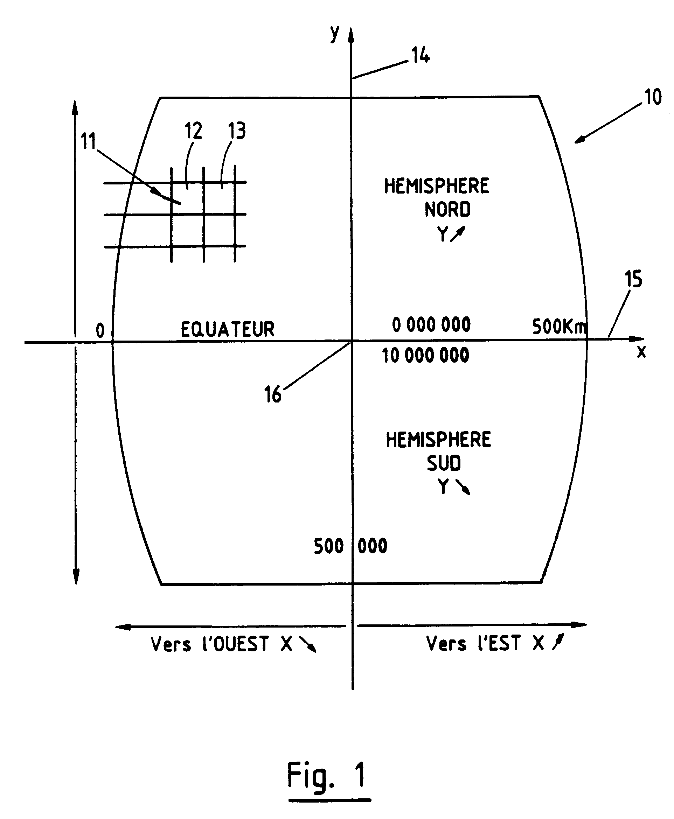

La projection cylindrique de la surface terrestre est décomposée en 60 fuseaux identiques, de 6° en longitude, dont les numéros croissent en se déplaçant vers l'Est de 1 à 60. Un fuseau 10 est schématisé en figure 1. A l'intérieur de chaque fuseau est réalisé un carroyage 11, qui permet de définir des zones terrestres 12, 13 de dimensions plus restreintes, elles-mêmes décomposables plus finement en sous-zones.

Chaque fuseau 10 comporte son propre système de référence en coordonnées cartésiennes (x, y). De façon conventionnelle, le méridien central 14 sert d'axe des ordonnées y, et l'équateur 15 est utilisé comme axe des abscisses.

L'axe des abscisses 15 est gradué de façon que le point central du fuseau 16 se trouve à une valeur arbitraire de 500 kms : les abscisses décroissent vers l'Ouest, et croissent vers l'Est, en conservant des valeurs toujours positives dans chaque fuseau.

L'axe des ordonnées 14 est gradué de façon que les valeurs de y croissent dans l'hémisphère Nord à partir de la valeur 0 km à l'équateur 15, et décroissent dans l'hémisphère Sud à partir de la valeur 10 000 kms également à l'équateur. Les ordonnées x sont donc également toujours positives dans chaque fuseau.

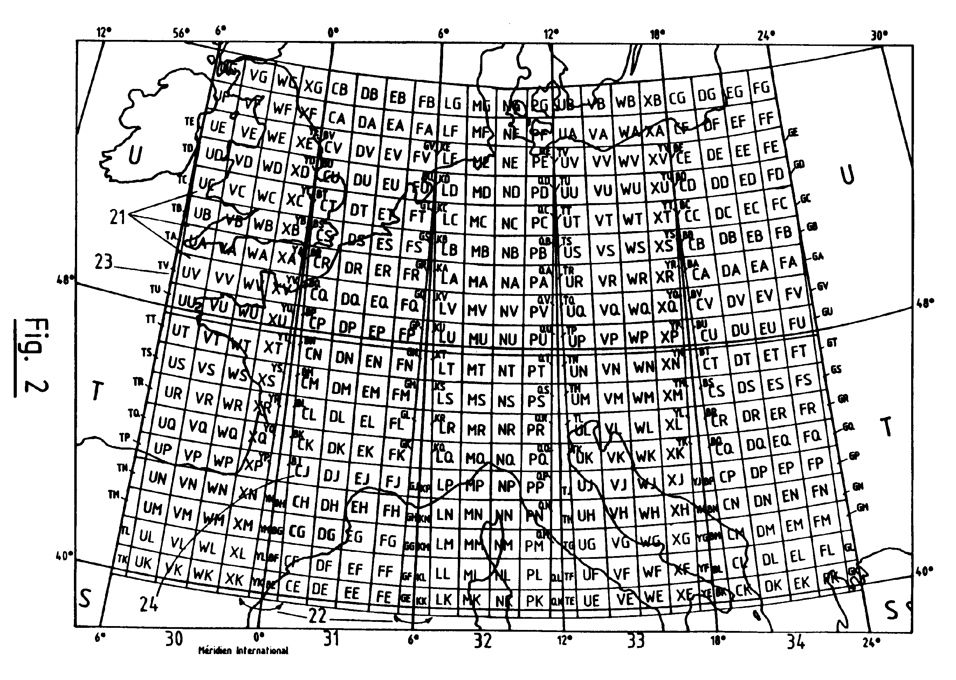

Un tel type de représentation plane et de carroyage de la surface terrestre est homogène à l'intérieur de chaque faisceau. En revanche, on est confronté clairement à un problème de rupture de chiffraison et du carroyage à chaque fois que l'on change de fuseau. Cette difficulté est illustrée en figure 2.

La figure 2 représente le carroyage UTM de l'Europe, et plus particulièrement de la portion comprise entre 6°O et 24°E en longitude, et 40°N à 56°N en latitude. Le carroyage est effectué par carrés 21 de 100 kms de côté repérés par les lettres de référence de la norme géographique mondiale GEOREF. La rotation de carroyage est identifiable à chaque passage d'un fuseau à un autre, sous la forme des angles 22 d'ouverture variable en fonction de la latitude.

La rotation du carroyage d'un fuseau à l'autre complique singulièrement la tâche du cartographe lorsqu'il désire mesurer par exemple la distance séparant deux points géographiques 23, 24 appartenant à des fuseaux différents, chacun des points 23, 24 étant repéré dans son fuseau spécifique.

Jusqu'à présent, la méthode employée consiste à exprimer l'un des points 24 dans le système cartésien de référence de l'autre point 23, en effectuant une conversion de coordonnées. De façon à rendre cette méthode plus aisée d'emploi, on a ainsi construit des matrices de conversion correspondant à chacun des cas de figure susceptibles de se présenter.

On conçoit toutefois que la systématisation d'une telle méthode, notamment dans le cas où l'on souhaite pouvoir traiter automatiquement, et simultanément, des points appartenant non seulement à deux faisceaux adjacents, mais encore des points répartis en des lieux quelconques de la surface du globe, exige des capacités de mémorisation considérables et relativement lourdes à gérer.

La gestion de cette méthode s'alourdit en outre de façon supplémentaire lorsqu'on souhaite réaliser une compatibilité d'une part avec d'autres systèmes de représentation, tels que ceux utilisés sur les zones maritimes (expressions en milles marins), ou d'autre part avec les mesures de rayonnement (localisation d'un point en coordonnées polaires : gisements, distances et sites).

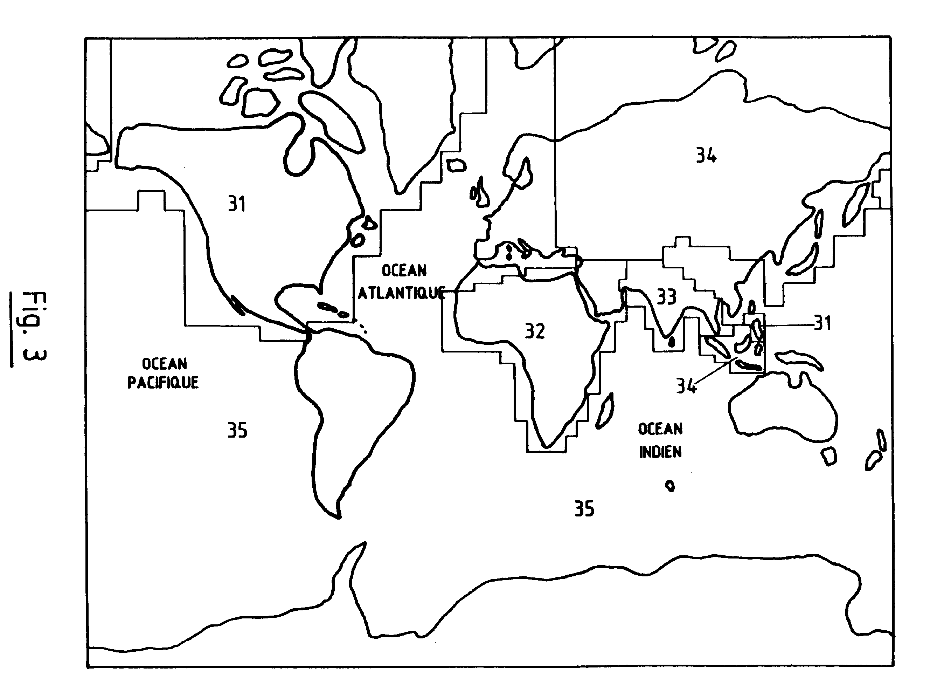

Enfin, pour la réalisation d'un système d'affichage réellement universel, il est également fondamental de pouvoir gérer simultanément des points appartenant à des sphéroïdes distinctes. La détermination de plusieurs sphéroïdes terrestres sur lesquelles appliquer la projection cylindrique de Mercator résulte de la forme irrégulière de la surface terrestre et de la date de conduite des études. La figure 3 symbolise schématiquement les zones de pertinence des cinq sphéroïdes principales. Ces sphéroïdes sont celles de Clarke 1866 (31), Clarke 1880 (32), Everest (33), Bessel (34), et la sphéroïde internationale (35). Chacune des sphéroïdes associées à une zone terrestre est telle que la distorsion résultant de l'application du système UTM ne dépasse pas 4 pour mille.

La multiplication des paramètres à prendre en compte pour la réalisation d'un système d'affichage universel rend donc les méthodes existantes inaptes à une automatisation opérationnelle.

L'invention a pour objectif de pallier cette inaptitude.

Plus précisément, un premier objectif de l'invention est de fournir un système d'affichage cartographique parfaitement universel, et implantable sur machine automatisée, permettant la localisation sur un fond de carte déterminé, et approprié, de tout point repéré d'une façon quelconque, à la surface terrestre.

Un objectif complémentaire de l'invention est de fournir un tel système d'affichage universel qui soit compatible avec toutes les fonctions et tous les traitements requis par la cartographie militaire, notamment la représentation graphique d'un déploiement d'unités en superposition sur un fond de carte.

Un autre objectif de l'invention est de fournir un tel système, permettant un affichage des objets superposés à un fond de carte selon le principe de projection cylindrique de Mercator, tout en présentant des paramètres configurables tels que notamment la largeur de fuseau, les conventions de chiffraison du système de référence de chaque fuseau, ou encore les sphéroïdes terrestres utilisées.

L'invention a également pour objectif de permettre le positionnement et l'affichage d'un objet donné sur des fonds de carte réalisés selon des systèmes référentiels différents.

Ces objectifs ainsi que d'autres qui apparaîtront par la suite sont atteints à l'aide d'un système d'affichage cartographique universel, du type destiné à permettre notamment la visualisation d'un objet repéré d'une façon quelconque à la surface terrestre, sur un fond de carte correspondant, ladite visualisation étant par exemple réalisée sur écran cathodique, ledit système comportant des moyens de mémorisation de fond de carte, caractérisé en ce qu'il comporte :

. des moyens d'affectation d'un repérage universel à chacun desdits objets repérés ;

. des moyens d'initialisation de l'affichage desdits points en superposition sur un fond de carte approprié ;

. des moyens de conversion dudit repérage universel de chacun desdits points dans les coordonnées cartésiennes caractéristiques dudit fond de carte de visualisation approprié.

De façon avantageuse, lesdits moyens de mémorisation desdits fonds de carte sont organisés de façon à référencer chaque fond de carte par une identification unique, spheroïde, hémisphère, un point de base en coordonnées cartésiennes, et une échelle de représentation.

Selon l'invention, lesdits moyens d'affectation d'un repérage universel à chacun desdits points repérés sont préférentiellement organisés de façon à associer à chaque point repéré d'une part un repérage en coordonnées géographiques et d'autre part un repérage en coordonnées cartésiennes UTM, avec informations d'hémisphère et de sphéroïde.

Selon une caractéristique de l'invention, le système comporte une première chaîne de conversion des objets et/ou des fonds de carte repérés initialement en coordonnées UTM, de façon à leur associer le repérage universel de l'invention et une seconde chaîne de conversion des objets initialement repérés en coordonnées géographiques, de façon à leur associer également le repérage universel de l'invention.

Chacune desdites chaînes de conversion comprend un module de test de cohérence des coordonnées initiales de l'objet, du fond de carte respectivement.

De façon avantageuse, lesdits moyens de commande d'affichage desdits points comprennent des moyens de sélection d'un fond de carte, et d'un système de représentation en référence cartésienne UTM appropriés.

D'autre part, lesdits moyens de conversion du repérage universel de chaque objet dans les coordonnées cartésiennes du fond de carte de visualisation comprennent préférentiellement :

. des moyens de conversion du repérage universel dans lesdites coordonnées cartésiennes du fond de carte ;

. des moyens de calcul des références dudit objet dans le carroyage conventionnel dudit fond de carte ;

. des moyens de calcul des coordonnées dudit objet dans l'écran d'affichage.

Avantageusement, lesdits moyens de conversion dudit repérage universel de chaque point en coordonnées cartésiennes d'affichage du fond de carte approprié comprennent des moyens de test de cohérence des coordonnées de l'objet avec le fond de carte.

D'autres caractéristiques et avantages de l'invention apparaitront à la lecture de la description suivante, donnée à titre illustratif et non limitatif, d'un mode de réalisation particulier de l'invention, et des dessins annexés dans lesquels :

. la figure 1 schématise la conformation et le paramétrage d'un fuseau UTM selon le système de Mercator ;

. la figure 2 représente la configuration du carroyage du continent européen dans le système UTM ;

. la figure 3 illustre les zones terrestres approximatives correspondant aux cinq sphéroïdes principales répertoriées ;

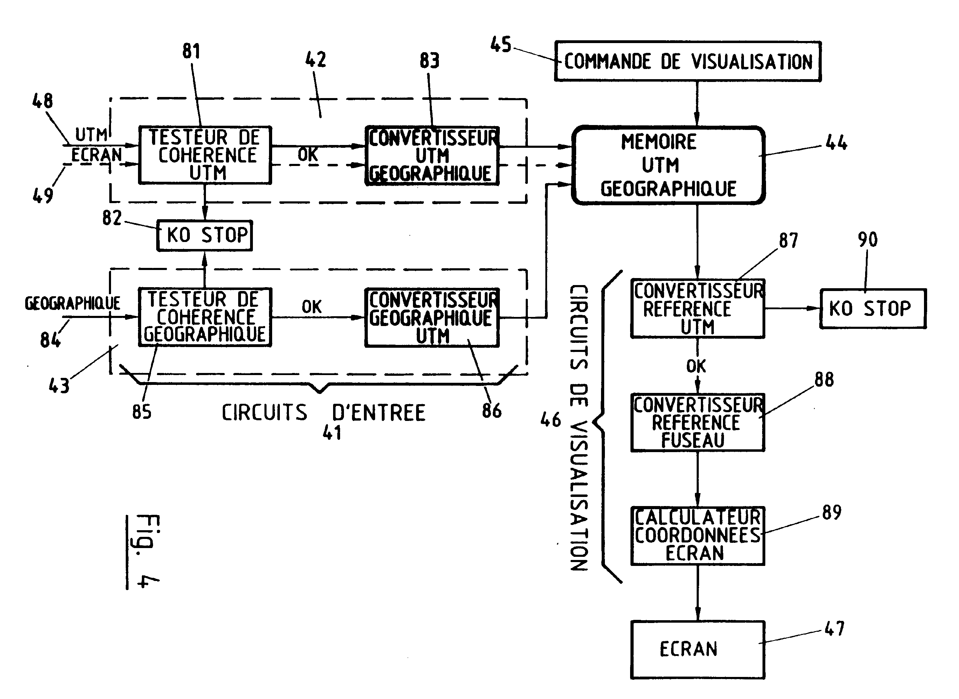

. la figure 4 est un schéma bloc illustrant les principaux modules fonctionnels d'un système d'affichage cartographique universel suivant l'invention ;

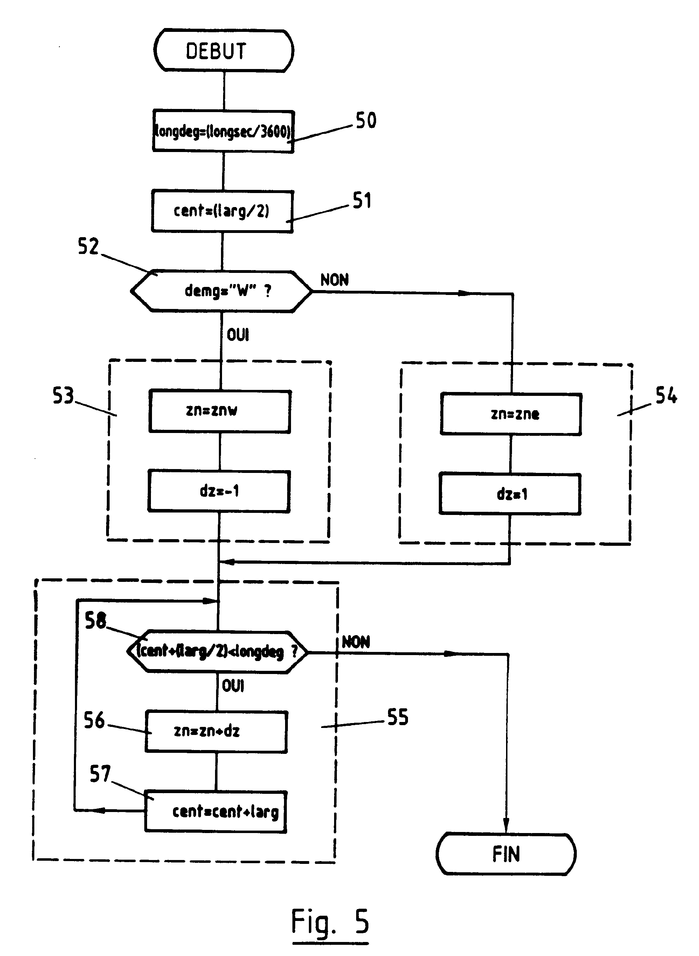

. les figures 5, 6 et 7 sont des organigrammes détaillant les chaînes de traitement correspondant à la conversion de coordonnées géographiques en coordonnées cartésiennes UTM, telles que mises en oeuvre dans le système d'affichage cartographique de l'invention.

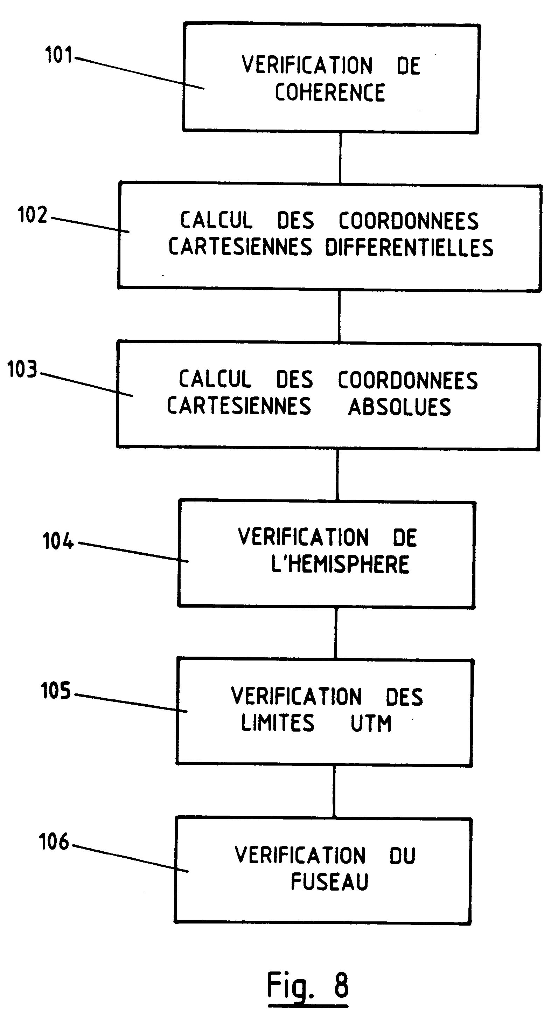

. la figure 8 représente l'organigramme d'un sous-programme de calcul de rayonnement compatible avec le système d'affichage cartographique de l'invention.

La figure 4 illustre les principaux modules fonctionnels d'un système d'affichage cartographique universel suivant l'invention.

Le système représenté se compose de circuits d'entrée 41 comprenant deux chaînes de conversion parallèles 42, 43, de moyens de mémorisation 44 du repérage universel des fonds de carte et des objets à afficher, des moyens 45 de commande de visualisation, et une chaîne 46 de visualisation proprement dite sur un écran 47.

Selon l'invention, la mémoire 44 stocke les fonds de carte en les référençant chacun par une identification spécifique, ainsi qu'un point de base en coordonnées cartésiennes et une échelle. Ce système de référencement permet d'une part de positionner chaque objet à afficher par rapport au point de base, et d'autre part d'afficher le fond de carte suivant une échelle quelconque souhaitée.

Il peut en outre être avantageux de mémoriser le point de base de chaque fond de carte selon le repérage universel utilisé pour les objets à afficher, de façon à permettre une représentation d'un même fond de carte sous plusieurs systèmes de référence. Dans ce cas, tous les points du fond de carte doivent également pouvoir être convertis.

Selon une caractéristique essentielle de l'invention, tous les objets à afficher sont stockés avec un repérage universel. Le repérage universel est constitué de la concaténation d'une part d'un repérage en coordonnées géographiques, et d'autre part d'un repérage en coordonnées cartésiennes UTM de l'objet (ou d'un point de base de l'objet).

Le stockage des coordonnées géographiques de l'objet assure l'universalité de son repérage, et notamment l'indépendance du repérage par rapport à la sphéroïde utilisée, et au Fuseau de projection.

Le stockage des coordonnées cartésiennes est ajouté de façon à permettre une représentation graphique immédiate sur le faisceau conventionnel établi à partir de la sphéroïde conventionnelle correspondant à la localisation géographique de l'objet. La représentation de l'objet suivant ces coordonnées conventionnelles est en effet statistiquement la plus probable.

Toutefois, dans tous les cas où l'objet devra être affiché sur un fond d'écran référencé selon un système différent du système conventionnel, par exemple selon les coordonnées d'un fuseau adjacent, voire d'une sphéroïde adjacente, on effectuera une conversion depuis les coordonnées géographiques stockées pour ledit objet.

Enfin, chaque objet stocké dans la mémoire 44 comporte également une information d'hémisphère (hémisphère Nord ou hémisphère Sud) ainsi qu'un identificateur de la sphéroïde correspondant aux coordonnées cartésiennes UTM.

On notera que le repérage universel ainsi défini par la concaténation de coordonnées géographiques, et de coordonnées cartésiennes avec information d'hémisphère et de sphéroïde, constitue un système redondant de repérage. Ce système redondant est conçu pour être optimal du point de vue des trois critères combinés d'universalité, de rapidité d'affichage et de sécurité.

Les moyens de mémorisation 44 sont alimentés par deux chaînes de conversion 42, 43.

La chaîne de conversion 42 assure la formation des informations de repérage universel pour les objets 48 entrés en coordonnées UTM, ainsi que pour chaque fond de carte 49 exprimé généralement dans les coordonnées cartésiennes UTM du fuseau auquel il appartient.

Un premier module 81 de la chaîne de conversion 42 joue le rôle de testeur de cohérence des coordonnées 48, 49 introduites. En cas d'incohérence, par exemple par suite d'une erreur de saisie, le module testeur 81 active un module 82 d'interruption et d'alerte.

Après confirmation de cohérence dans le module testeur 81, les données 48, 49 sont introduites dans le module convertisseur 83 qui vient calculer les coordonnées géographiques universelles de l'objet et/ou du fond de carte introduit, et concatène les coordonnées géographiques aux coordonnées UTM pour la constitution de l'information de repérage universel stockée dans les moyens de mémorisation 44.

La chaîne de conversion 43 présente une architecture symétrique de la chaîne 42 qui vient d'être décrite.

Les données d'entrée 84 sont constituées par les coordonnées géographiques d'objets à afficher. Ces coordonnées géographiques sont testées tout d'abord dans un module testeur 85 de la cohérence des coordonnées introduites. En cas d'incohérence, le module 82 d'interruption et d'alerte est activé.

Après confirmation de la cohérence par le module testeur 85, les données sont introduites dans le module de conversion 86 de calcul des coordonnées cartésiennes UTM correspondant aux coordonnées géographiques 84 introduites et de concaténation des coordonnées UTM aux coordonnées géographiques pour former l'information de repérage universel stockée dans les moyens de mémorisation 44.

Le module de commande de visualisation 45 initialise et pilote le fonctionnement de la chaîne de visualisation 46 à travers les moyens de mémorisation 44.

Le module de commande 45 sélectionne, de façon manuelle ou automatique, le fond de carte à afficher, et les coordonnées cartésiennes de référence du fond de carte. Il active également les circuits de visualisation 46 pour le positionnement et l'affichage des objets repérés et stockés dans les moyens de mémorisation 44, sur le fond de carte correspondant.

La chaîne de visualisation 46 comprend trois modules consécutifs 87, 88, 89, qui fournissent en fin de chaîne un signal affichable sur l'écran 47.

Le module 87 est un module de conversion de l'information de repérage universel de l'objet stocké en mémoire 34 dans les références cartésiennes UTM du fond de carte affiché. Le module de conversion 87 comporte des moyens de test de cohérence, qui permettent d'activer un module 90 d'interruption et d'alerte en cas d'inadéquation du fond de carte pour l'objet en cours de traitement.

En cas d'adéquation, le module de conversion fournit les coordonnées cartésiennes calculées à un second module de conversion 88. Ce second module de conversion 88 a pour fonction de positionner l'objet dans les coordonnées spécifiques au fuseau auquel il appartient.

Enfin, l'information obtenue en sortie du second module de conversion 88 est transmise à un module 89 de calcul du positionnement de l'objet en cours de traitement sur l'écran de visualisation, en fonction de l'échelle de représentation sélectionnée.

L'échelle de représentation est avantageusement déterminée par le module de commande 45, soit de façon automatique en fonction de l'ensemble d'objets qu'on souhaite voir afficher simultanément, soit de façon manuelle.

On va maintenant présenter le détail des chaînes de traitement 42, 43 des circuits d'entrée 41.

On notera que le module de conversion géographique-UTM 86 de la chaîne de traitement 43, qui va être présenté en premier, correspond en substance au module de conversion 88 de la chaîne de visualisation.

On adopte ci-après les conventions d'écriture suivantes :

Larg     : largeur du fuseau en degrés
Znw     : fuseau ouest de Greenwich
Zne     : fuseau est de Greenwich
EO     : abscisse centrale du fuseau (500 000)
NN     : ordonnée de l'équateur dans l'hémisphère Nord (0)
NS     : ordonnée de l'équateur dans l'hémisphère Sud (10 000 000)

Le module testeur 85 effectue la vérification des données en entrée :

   si on pose :

   . latitude : deglat/minlat/seclat/Hem (variables représentant respectivement les degré, minute, seconde et nature de l'hémisphère de l'objet considéré).

   . longitude : deglong/minlong/seclong/Hem (variables représentant respectivement les degré, minute, seconde et nature de l'hémisphère de l'objet considéré)

il faut :

$0 \leqq$ deglat $\leqq 80$

$0 \leqq$ minlat $\leqq 59$

$0 \leqq$ seclat $\leqq 59$

Hem = "N" ou Hem = "S" (hémisphère nord, ou sud)

$0 \leqq$ deglong $\leqq 180$

$0 \leqq$ minlong $\leqq 59$

$0 \leqq$ seclong $\leqq 59$

Demg = "W" ou Demg = "E" (demi globe géographique ouest, ou est)

latsec = ((Deglat* 3600)+(Minlat* 60)+(Seclat)) $\leqq$ 288 000

longsec=((Deglong*3600)+(Minlong*60)+(Seclong)) $\leqq$ 648 000

Au cas où l'une de ces conditions n'est pas vérifiée, le module d'interruption et d'alerte 82 est activé.

L'opération de conversion proprement dite, mise en oeuvre dans le module 86, ou dans le module 88, revient tout d'abord à rechercher le fuseau auquel appartient l'objet en cours de traitement. Bien entendu, on a auparavant déterminé la sphéroïde de projection correspondante.

La détermination du fuseau approprié revient à rechercher le numéro de fuseau (numéro de zone zn) dont le centre 16 (fig. 1) se trouve à moins d'une demi largeur de fuseau en longitude du point de base de l'objet en cours de traitement.

Un exemple d'organigramme de mise en oeuvre est représenté en figure 5.

L'étape 50 convertit la longitude du point en cours de traitement en degré. L'étape 51 calcule la demi-valeur (cent) d'une largeur de faisceau (larg), qui sera utilisée plus loin pour l'incrémentation intéractive des coordonnées du centre de chaque faisceau.

L'étape 52 introduit l'initialisation 53, 54 des numéros de fuseau (zn), et de l'incrément/décrément dz du numéro de fuseau utilisé dans la procédure itérative 55. L'orientation vers l'un ou l'autre des modules d'initialisation 53, 54, est effectuée par le module 52 en déterminant si le point en cours de traitement se trouve dans le demi globe géographique ouest, ou est (demg), respectivement.

Le module itératif 55 consiste à incrémenter le numéro de faisceau (56) et l'abscisse correspondante du centre du faisceau (57) tant que le centre de fuseau courant ne se trouve pas à moins d'une demi largeur de fuseau en longitude du point en cours de traitement (58).

Lorsque le numéro de fuseau zn est déterminé, on calcule l'abscisse et l'ordonnée de l'objet en cours de traitement dans les coordonnées du fuseau.

La chaîne d'instructions pour le calcul des coordonnées cartésiennes est avantageusement la suivante (les noms de variables utilisés n'ont aucune signification particulière, et correspondent seulement à des variables intermédiaires) :

$Centsec = (cent * 3600)$

$. P = Abs(longsec - centsec) * (10^{-4})$

$. JO = latsec * Pi/3600/180$

$. Aa = Sin (JO)$

$. Bb = Cos (JO)$

$. Cc = Tan (JO)$

$. Dd = Sin(Pi/180/3600) : Sinus\ 1\ seconde$

$. V = Aa * Bb$

$. U = (Bb^2)$

$. J2 = JO + V$

$. J4 = ((3*J2) + (2*U*V))/4$

$. J6 = ((5*J4) + (2*V*(U^2)))/3$

$. J8 = ((7*J6) + (4*V*(U^3)))/8$

$RO = ((A*(1 - (Ee^2))/(1 - (Ee^2)*(Aa^2)))^{(3/2)}))$

$Nu = RO * (1 + ((Ep^2) * (Bb^{\ 2})))$

$Q1 = KO * C * (JO - (Alpha * J2) + (Béta * J4) - (Gamma * J6) + (Delta * J8$

$Q2 = (NU*Aa*Bb*(Dd^2)* KO * (10_8))/2$

$Q3 = ((Dd^4) * Nu * Aa * (Bb^3) * (5 - (Cc^2) + (9 * (Ep^2) * (Bb^2))$

$Q4 = Nu \times Bb * Dd * KO * (10\text{\textasciicircum}4)$

$Q5 = (Dd^3) * NU * (Bb^{\ 3}) * (1 - (Cc^2) + ((Ep^{\ 2}) * (Bb^2))) * KO * (10^{12})/6$

Ces variables intermédiaires permettent de calculer la différence en abscisse De du point considéré par rapport au méridien central du fuseau :

$$De = (P * Q4) + ((P^3)* Q5)$$

et la différence en ordonnée Dn par rapport à l'équateur :

$$Dn = (Q1 + (Q2 * (P^2)) + (Q3 * (P^4)))$$

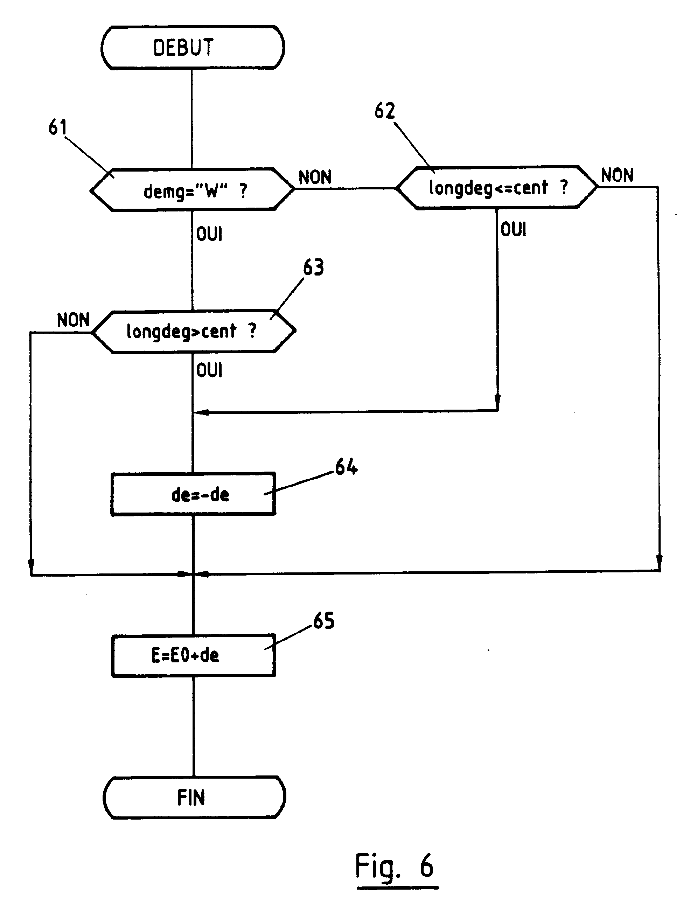

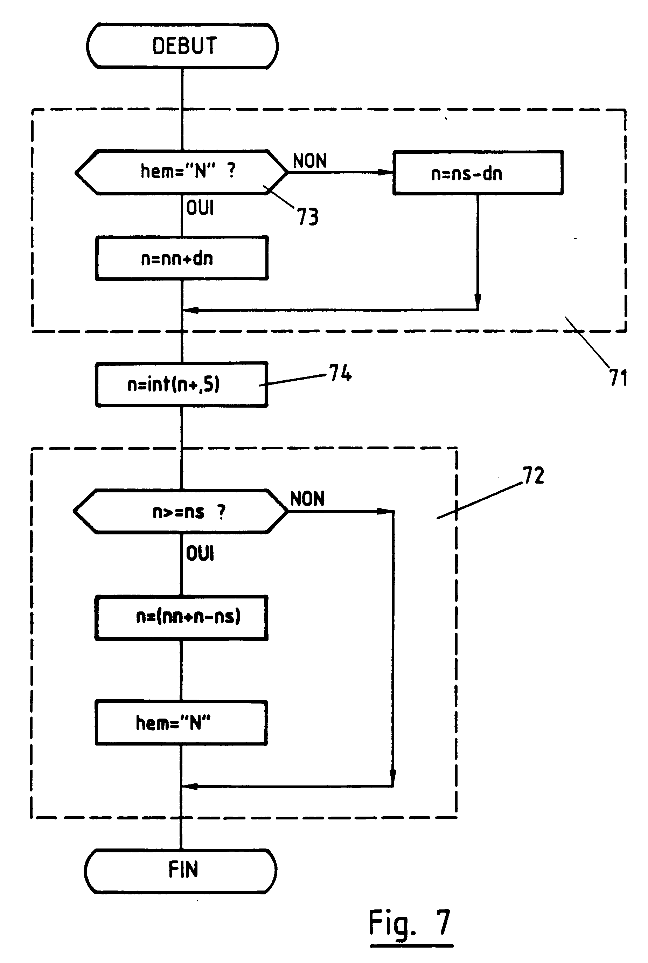

Les organigrammes des figures 6 et 7 présentent les logiques de calcul des abscisses absolues et ordonnées absolues respectivement, du point en cours de traitement, à partir des différences en abscisse De, et en ordonnée Dn calculées plus haut.

Les modules 61, 62 et 63 (demi globe d'appartenance, et demi fuseau d'appartenance) permettent d'affecter un signe négatif (64), ou non à la différence en abscisse De. La différence en abscisse De ainsi pourvue d'un signe est ensuite additionnée à l'abscisse centrale du fuseau E0, dans le module 65, pour obtenir l'abscisse absolue E du point en cours de traitement.

Cet organigramme permet de résoudre le problème de l'accroissement de la longitude par rapport au méridien central du fuseau, qui se traduit soit par une diminution de l'abscisse par rapport à E0 si on va vers l'ouest (demg = W), soit par une augmentation de cette abscisse par rapport à E0 si on va vers l'est (demg = E).

L'organigramme de la figure 7 permet de calculer l'ordonnée absolue n du point en cours de traitement, à partir de la différence en ordonnée dn par rapport à l'ordonnée de l'équateur. Le module 71 assure cette fonction, en tenant compte de l'hémisphère hem d'appartenance du point courant (73).

Le module 72 vérifie que l'ordonnée n ainsi calculée ne dépasse pas les limites de l'hémisphère considéré, ce qui se traduirait par une incohérence dans la valeur de l'ordonnée du fait des conventions retenues. Cette opération de test est effectuée sur la valeur entière de l'ordonnée absolue n, préalablement effectuée dans le module 74.

La chaîne de traitement 42 effectue le calcul des coordonnées cartésiennes UTM des objets et/ou des fonds de carte introduits en coordonnées géographiques. On présente ci-après des moyens de réalisation de cette fonction.

Les conventions d'écriture sont les mêmes que celles adoptées jusqu'à présent.

De manière à lever les ambiguïtés concernant l'hémisphère de travail, il convient que lors de son initialisation, l'opérateur spécifie s'il travaillera a priori :

. dans l'hémisphère Nord      Hemb = "N"

. dans l'hémisphère Sud      Hemb = "S"

. à cheval sur l'équateur      Hemb = "B"

Le module testeur 81 effectue la vérification des données en entrée :

Soient les coordonnées cartésiennes initiales : numéro de zone/abscisse/ordonnée

Il faut que le numéro de zone zn vérifie :

$$(ZNW + 1) - (180/\text{larg}) \leq ZN \leq (ZNE - 1) + (180/\text{larg})$$

L'abscisse (Eastg) doit vérifier :

$$EO - \text{geoutm} (0,\text{larg}/2) \leq \text{Eastg} \leq EO + \text{geoutm} (0,\text{larg}/2)$$

(Il s'agit d'une vérification de premier ordre. Lorsque la latitude sera calculée, il conviendra d'effectuer une vérification de deuxième ordre.

L'ordonnée (Northg) doit vérifier suivant le cas :

. si Hemb = "N" :

   Northg $\geq$ NN alors Hem = Hemb

. si Hemb = "S", il faut :

   Northg $\leq$ NS alors Hem = Hemb

. si Hemb = "B" alors :

   - si Northg $\leq$ NN + ½ (NS - NN) Hem = "N"

   - si Northg < NS - ½ (NS - NN) Hem = "S"

Au cas où l'une de ces conditions n'est pas vérifiée, il y a refus de calcul avec diagnostic d'erreur (module 82).

Le calcul des coordonnées géographiques proprement dit comporte les étapes suivantes :

Calcul de la longitude du méridien central du fuseau :

  . si ZN $\leq$ ZNW ZNb = ZHW     Demg = "W"

  . si ZN $\geq$ ZNE ZNb = ZNE     Demg = "E"

long cendeg = ((|ZN - ZNb| * larg) +larg/2))

long censec = long cendeg * 3600

Calcul du différentiel d'ordonnée

  . si Hem = "N" alors     Delta Y = Northg - NN

  . si Hem = "S" alors     Delta Y = NS - Northg

Calcul de la latitude :

  ce calcul passe par l'inversion de la fonction :

Q1 : Delta Y = f(lat)

On préconise de passer par une méthode récurrente particulièrement bien adaptée au fonctionnement des ordinateurs et qui donne une précision suffisante dans des délais raisonnables (de 3 à 5 passages).

  Inversion Q1 :

Q = 0,P = 0

YY = Delta Y

début :

Phi p = YY/C/KO

Aa = SIN (Phi p)

Bb = COS (Phi p)

Cc = TAN (Phi p)

V = Aa * Bb

J2 = Phi p + V

J4 = ((3 * J2) + (2 * V * U))/4

J6 = ((5 * J4) + (2 * V * (U²)))/3

J8 = ((7 * J6) + (4 * V * ($U^3$)))/8

Q1 = KO*C*(Phi p - (Alpha*J2) + (Béta*J4) - (Gamma*J6) + (Delta*J8))

Si │Delta Y - Q1│ > 0.005

alors YY = YY + Delta Y - Q1, goto début :

sinon FIN.

Calcul proprement dit :

Q = │(eastg - EO) * ($10^{-6}$)│

YY = Delta Y

Début :

Phi p = YY/C/KO

Aa = SIN (Phi p)

Bb = COS (Phi p)

Cc = TAN (Phi p)

RO = ((A* (1 - ($Ee^2$))/(1 - (($Ee^2$) * ($Aa^2$)))$^{(3/2)}$))

Nu = RO * (1 + (($Ep^2$) * ($Bb^2$)))

Q7 = (Cc * (1 + (($Ep^2$) * ($Bb^2$))) * ($10^{12}$))/(2*($Nu^2$)

* Dd * ($KO^2$))

Q8 = (Cc * (5 * (3 * ($Cc^2$)) + (6 * ($Ep^2$) * ($Bb^2$)) - (6 * ($Ep^2$) * ($Aa^2$)) - (3 * ($Ep^4$) * ($Bb^4$)) - (9 * ($Ep^4$) * ($Aa^2$) * ($Bb^2$)))

* ($10^{24}$))/(24 * ($Nu^4$) * Dd * ($KO^4$)

Q9 = ($10^6$)/(Bb * Nu * Dd * KO)

Q10 = (1 + (2 * ($Cc^2$)) + (($Ep^2$) * ($Bb^2$))) * ($10^{18}$)/6 /($Nu^3$) / Dd / ($KO^3$) / Bb

Delta long = ((Q9 * Q) - (Q10 * ($Q^3$)))

P = │Delta long * ($10^{-4}$)│

Phi = (Phi p * 180/Pi * 3600) - (Q7 * ($Q^2$)) + (Q8 * ($Q^4$))

JO = Phi * Pi/180/3600

V = SIN(JO) * COS(JO)

U = (COS (JO)$^2$)

J2 = JO + V

J4 = ((3 * J2) + (2 * V * U))/4

J6 = ((5 * J4) + (2 * V * ($U^2$)))/3

J8 = ((7 * J6) + (4 * V * ($U^3$)))/8

Aaa = SIN (JO)

Bbb = COS (JO)

Ccc = TAN (JO)

RO ((A * (1 - $Ee^2$))/(1 - (($Ee^2$) * ($Aaa^2$)))$^{(3/2)}$))

Nu = RO * (1 + (($Ep^2$) * ($Bbb^2$)))

Q1 = KO * C * (JO - (Alpha * J2) + (Béta * J4) - (Gamma * J6) + (Delta * J8)

Q2 = (Nu * Aaa * Bbb * ($Db^2$) * KO * ($10^8$))/2

Q3 = (($Dd^4$) * Nu * Aaa * ($Bbb^3$) * (5 - ($Ccc^2$) + (9 * ($Ep^2$) * ($Bbb^2$)) + 4 * ($Ep^4$) * ($Bbb^4$))) * KO * ($10^{16}$))/24

Dn = Q1 - (Q2 * ($P^2$)) + Q3 * ($P^{o-4}$))

Si │Delta Y - Dn│ ≧ 0.0005

alors : YY = YY - Delta Y - Dn          goto début

sinon :**

Si │Deltalong│ > 10 800 erreur eastings (vérification du second ordre).

deglat = INT (Phi/3600)

minlat = INT ((Phi - deglat x 3600))/60)

seclat = INT (Phi-(deglat * 3600) - (minlat * 60)+0.5)

    - Si seclat ≧ 60 alors seclat = (seclat - 60) et minlat = (minlat + 1)

    - Si minlat ≧ 60 alors (minlat - 60) et deglat = (deglat + 1)

    - Si Demg = "W" et E ≧ EO

      alors Delta long = - Delta long

      seclong = longcensec + Delta long

      deglong = INT (seclong - (deglong * 3600))/60)

      seclong = INT (seclong - (deglong * 3600)

      - (minlong * 60) + 0.5)

    - Si seclong ≧ 60 alors seclong = (seclong - 60) et minlong = (Minlong + 1)

    - Si minlong ≧ 60 alors minlong = (minlong - 60) et deglong = (deglong + 1)

Le résultat est donc :

deglat/minlat/seclat/hem, d'une part, (latitude géographique) et
deglong/minlong/seclong/Demg, d'autre part (longitude géographique)

Avant affichage de l'objet sur le fond de carte, il est nécessaire de déterminer si l'objet appartient effectivement au fond de carte tel que représenté. Ceci est avantageusement réalisé en recherchant si le point de base de l'objet se situe dans l'écran par rapport au point de base du fond de carte. En d'autres termes, si Delta X et Delta Y représentent les distances en abscisse et ordonnée de l'objet par rapport au point de base du fond de carte, et e l'échelle d'affichage du fond de carte sur écran, les deux expressions e*Delta X et e*Delta Y doivent être inférieures ou égales à la taille maximale du graphique.

Les valeurs Delta X et Delta Y peuvent avantageusement être calculées à partir de deux sous-programmes :

. un sous-programme de calcul de coordonnées polaires, permettant d'exprimer le point de base de l'objet en coordonnées polaires par rapport au point de base du fond de carte, à partir des coordonnées cartésiennes des deux points ;

. un sous-programme de calcul de rayonnement, permettant d'obtenir les coordonnées cartésiennes d'un point connaissant les coordonnées cartésiennes d'un autre point, le pôle (par exemple le point de base du fond de carte), et les coordonnées polaires du point visé à partir du pôle.

Ces sous-programmes peuvent servir, d'une manière plus générale, à effectuer des traitements entre points affichés (calcul de distances, visualisation de points d'impact d'objets balistiques,...)

Comme on le verra ci-après, ces programmes incluent des étapes de vérification de la localisation de l'objet, qui est généralement repérée par rapport au point de base du fond de carte. Cette vérification porte sur la nature de l'hémisphère auquel il appartient, son appartenance ou non aux limites UTM en latitude, ainsi que son fuseau d'appartenance.

La figure 8 est un organigramme illustrant le sous-programme de calcul de rayonnement.

Ce sous-programme revient en substance à exécuter la fonction:

$$(ZN, Esatg, Northg, Alt) = TRA ((Zn, Eastg, Northg, Alt), (Brg, Dist, A/S))$$

où :

Brg = Bearing (gisement)

Dist = Distance (distance)

A/S = Angle of Site (site)

Les autres variables correspondent à des notations déjà explicitées.

Le module 101 de vérification des valeurs en entrée réalise les opérations suivantes :

Vérification du numéro de zone, ZN :

$$(ZNW + 1) - (180/large) \leqq ZN \leqq (ZNE - 1) + (180/larg)$$

Vérification de l'ordonnée, Northg :

. si Hemb = "N" il faut $Northg \geqq NN$

. si Hemb = "S" il faut $Northg \leqq NS$

. si Hemb = "B" il faut $NS \geqq Northg \geqq NN$

Vérification de l'altitude, Alt :

- 500 < + Alt < + 9000

Vérification du gisement, Brg :

$0 \leqq Brg \leqq 6400$

Vérification du site, A/S :

$- 1599 \leqq A/S \leqq 1599$

L'étape 012 de calcul des coordonnées différentielles comporte :

. Calcul de la distance topographique, DT :

DT = Dist * COS ((A/S) * Pi/3200)

(le site est converti en radian).

. Différentiel en abscisse : Delta X

Delta X = DT * SIN (-(BRG - 1600) * Pi/3200)

(le gisement est converti en un angle trigonométrique exprimé en radians).

. Différentiel en ordonnée, Delta Y :

Delta Y = DT * COS (-(BRG - 1600) * Pi/3200)

Le gisement est converti en un angle trigonométrique exprimé en radians.

. Différentiel en altitude, Delta Z :

Delta A = Dist * Sin((A/S) * Pi/3200)

Le site est exprimé en radians.

L'étape 103 de calcul des coordonnées absolues s'effectue simplement par addition aux coordonnées cartésiennes du pôle :

        ZZ = ZN

        XX = Eastg + Delta X

        YY = Northg + Delta Y

        AA = Alt + Delta A


L'étape de vérification des coordonnées obtenue comporte trois phases 104, 105, 106.

. Phase 104 : vérification de l'hémisphère

        Si hemb = "N" et YY < NN

        alors YY = NS - (NN - YY)

        Si hemb = "S" et YY > NS

        alors YY = NN + (YY - NS)

        Si hemb = "B" et YY > NS

            ou YY < NN        erreur

. Phase 105 : limites UTM

Pour vérifier si le point n'est pas hors des limites UTM, soient 80° N et 80° S en latitude, il faut calculer sa latitude par le programme de conversion UTM/géographique.

. Phase 106 : fuseau d'appartenance

Pour vérifier si le point n'est pas dans le fuseau voisin, le même calcul de conversion UTM/géographique fournit Delta long (différentiel en longitude). Dans le cas de fuseaux de 6° de longitude, si $|$Delta long$|$ $\leq$ 3°, le point est dans le même fuseau que le point de base de référence. Sinon, ayant obtenu les coordonnées géographiques du point, il convient ensuite de calculer les coordonnées cartésiennes du point résultant dans le bon fuseau, au moyen de programme de conversion géographique/UTM détaillé précédemment.

Le sous-programme de calcul de coordonnées polaires peut s'exprimer sous la forme de la fonction RTP :

        (Brg, Dist, A/S)  =  rtp ((ZN1, Eastg1, Northg1, Alt1), (ZN2, Eastg2, Northg2, Alt2))

Il comprend avantageusement une étape de vérification des valeurs en entrée. La vérification des numéros de zone ZN1, ZN2 de chacun des points doit vérifier :

(ZNW + 1) - (180/larg) < ZN1 < (ZNE - 1) + (180/larg)

et (ZNW + 1) - (180/larg) $\leq$ ZN2 $\leq$ (ZNE - 1) + (180/larg)

et ZN1 = ZN2 ou $|$ZN2 - ZN1$|$ = 1

        ou ZN1 = (ZNW + 1) - (180/larg)

            et ZN2 = (ZN2 - 1) + (180/larg)

        ou ZN2 = (ZNW + 1) - (180/larg)

            et ZN1 = (ZNE - 1) + (180/larg)


Autrement dit, il faut que les deux points soient dans le même fuseau ou dans deux fuseaux voisins (en tenant compte de la rupture de chiffraison aux antipodes de Greenwich).

La vérification des ordonnées et des altitudes s'affectue de la même manière que pour le sous-programme de calcul de rayonnement.

Le calcul des coordonnées polaires nécessite tout d'abord d'exprimer les deux points dans un seul fuseau, celui du pôle, puis d'effectuer le calcul inverse du rayonnement.

. Si ZN1 = ZN2, sans objet,

. Sinon :

le programme de conversion UTM/géographique permet d'obtenir les coordonnées géographiques du point 2.

. Si $|$ZN1 - ZN2$|$ = 1

alors si ZN2 > ZN1 on applique le programme de conversion géographique/UTM en forçant (cent) à (cent + larg).

. Si ZN2 < ZN1 on applique le programme de conversion géographique/UTM en forçant (cent) à (cent - larg).

. Si ZN2 = (ZNW + 1) - (180/larg) $\rightarrow$ ZN2 > ZN1

. Si ZN2 = (ZNE - 1) + (180/larg) $\rightarrow$ ZN2 < ZN1

En fin de calcul, on dispose des coordonnées des points exprimées dans le fuseau ZN1.

ZN1 / Eastg1 / Northg1 / Alt 1

ZN1 / XX / YY / Alt2

On notera que si ZN1 = ZN2 : XX = Eastg2 et YY = Northg2

Il est ensuite possible d'effectuer le calcul de la distance topo, DT :

$$DT = ((XX - Eastg1)^2 + (YY - Northg1)^2)^{1/2}$$

· Si DT = 0 alors Brg = 0 Dist = 0 A/S = 0, les deux points sont confondus.

Le calcul du gisement, Brg, s'obtient par :

$$Brg = 3200/Pi * Asin ((XX - Eastg1)/DT)$$

Brg vérifiant la double inégalité, 0 ≦ Brg ≦ 6400

les valeurs finales correspondent aux cadrans suivants :

**(YY - Northg1)**

| | |
|---|---|
| 4800 ≤ Brg ≤ 6400 | 0 ≤ Brg ≤ 1600 |

————————————————— O ——————————— **(XX - Eastg1)**

| | |
|---|---|
| 3200 ≤ Brg ≤ 488 | 1600 ≤ Brg ≤ 3200 |

Le site s'exprime : A/S = Atan ((AA - Alt1)/DT) * 3200/Pi

**Revendications**

1.  Système d'affichage cartographique universel, du type destiné à permettre notamment la visualisation d'un objet repéré d'une façon quelconque à la surface terrestre, sur un fond de carte correspondant, ladite visualisation étant par exemple réalisée sur écran cathodique, ledit système comportant des moyens (44) de mémorisation de fonds de carte, caractérisé en ce qu'il comporte :
    . des moyens (42,43) d'affectation d'un repérage universel UTM à chacun desdits objets repérés ;
    . des moyens d'initialisation (45) de l'affichage desdits points en superposition sur un fond de carte approprié ;
    . des moyens (46) de conversion dudit repérage universel UTM de chacun desdits points dans les coordonnées cartésiennes caractéristiques dudit fond de carte de visualisation approprié.

2.  Système selon la revendication 1 caractérisé en ce que lesdits moyens (44) de mémorisation desdits fonds de carte sont organisés de façon à référencer chaque fond de carte par une identification unique, sphéroïde, hémisphère, un point de base en coordonnées cartésiennes, et une échelle de représentation.

3.  Système selon la revendication 1 caractérisé en ce que lesdits moyens (42, 43) d'affectation d'un repérage universel à chacun desdits points repérés sont organisés de façon à associer à chaque point repéré d'une part un repérage en coordonnées géographiques et d'autre part un repérage en coordonnées cartésiennes UTM, avec informations d'hémisphère et de sphéroïde.

4.  Système selon l'une des revendications de 1 à 3 caractérisé en ce que les moyens (44) de mémorisation de fond de carte comprennent également des secteurs de mémorisation desdits points repérés munis de leur repérage universel.

5.  Système selon la revendication 3, caractérisé en ce qu'il comporte une chaîne (42) de conversion des objets (48) et/ou des fonds de carte (49) repérés initialement en coordonnées UTM, de façon à leur associer ledit repérage universel.

6.  Système selon la revendication 3, caractérisé en ce qu'il comporte une chaîne (43) de conversion des objets (84) initialement repérés en coordonnées géographiques, de façon à leur associer ledit repérage universel.

7.  Système selon la revendication 5 ou 6 caractérisé en ce que ladite chaîne de conversion (42, 43) comprend un module (81, 85) de test de cohérence des coordonnées initiales de l'objet (48,84), du fond de carte (49) respectivement.

8. Système selon la revendication 1 caractérisé en ce que lesdits moyens (45) de commande de l'affichage desdits points comprennent des moyens de sélection d'un fond de carte, et d'un système de représentation en référence cartésienne UTM appropriés.

9. Système selon la revendication 1 caractérisé en ce que les moyens de conversion du repérage universel de chaque objet dans les coordonnées cartésiennes du fond de carte de visualisation comprennent :
   - des moyens (87) de conversion du repérage universel dans lesdites coordonnées cartésiennes du fond de carte ;
   - des moyens (88) de calcul des références dudit objet dans le carroyage conventionnel dudit fond de carte ;
   - des moyens (89) de calcul des coordonnées dudit objet dans l'écran d'affichage.

10. Système selon la revendication 9 caractérisé en ce que lesdits moyens (87) de conversion dudit repérage universel de chaque point en coordonnées cartésiennes d'affichage du fond de carte approprié comprennent des moyens de test de cohérence des coordonnées de l'objet avec le fond de carte.

11. Système selon la revendication 1 caractérisé en ce qu'il comprend des moyens de vérification de l'appartenance d'un objet audit fond de carte visualisé, lesdits moyens de vérification comportant des moyens d'identification de l'hémisphère et/ou de la sphéroïde et/ou du fuseau d'appartenance de chacun des deux points.

12. Système selon la revendication 11 caractérisé en ce que lesdits moyens de vérification coopèrent avec des moyens de calcul des coordonnées cartésiennes de chacun desdits points dans son fuseau d'appartenance, à partir dudit repérage universel affecté audit point.


**Patentansprüche**

1. Universelles kartographisches Anzeigesystem, das insbesondere einen auf beliebige Weise erfaßten Punkt auf der Erdoberfläche über einem entsprechenden Kartenuntergrund anzeigen soll, wobei die Anzeige beispielsweise auf dem Bildschirm einer Kathodenstrahlröhre erfolgen soll und das System Mittel (44) zur Speicherung des Kartenuntergrunds aufweist, dadurch gekennzeichnet, daß das System weiter aufweist
   - Mittel (42, 43), um jedem der erfaßten Objekte ein universelles Koordinatensystem UTM zuzuordnen,
   - Initialisierungsmittel (45) für die Anzeige der Punkte in Überlagerung über einem geeigneten Kartenuntergrund,
   - Mittel (46) zur Umwandlung der universellen Koordinaten UTM jedes der Punkte in die kartesischen Koordinaten, die für den anzuzeigenden geeigneten Kartenuntergrund charakteristisch sind.

2. System nach Anspruch 1, dadurch gekennzeichnet, daß die Mittel (44) zur Speicherung des Kartenuntergrunds so organisiert sind, daß jeder Kartenuntergrund durch eine einzige Identifizierung, nämlich Sphäroid, Hemisphäre, einen Basispunkt in kartesischen Koordinaten und einen Darstellungsmaßstab bezeichnet ist.

3. System nach Anspruch 1, dadurch gekennzeichnet, daß die Mittel (42, 43), die jedem erfaßten Punkt universelle Koordinaten zuzuordnen sollen, so organisiert sind, daß jedem erfaßten Punkt einerseits geographische Koordinaten und andererseits kartesische Koordinaten UTM mit Informationen hinsichtlich der Hemisphäre und des Sphäroids zugeordnet werden.

4. System nach einem der Ansprüche 1 bis 3, dadurch gekennzeichnet, daß die Mittel (44) zur Speicherung des Kartenuntergrunds außerdem Sektoren zur Speicherung der erfaßten Punkte mit ihren universellen Koordinaten enthalten.

5. System nach Anspruch 3, dadurch gekennzeichnet, daß es eine Kette (42) zur Umwandlung der Objekte (48) und/oder des Kartenuntergrunds (49) aufweisen, die ursprünglich in UTM-Koordinaten aufgenommen wurden, so daß ihnen die universellen Koordinaten zugeordnet werden.

6. System nach Anspruch 3, dadurch gekennzeichnet, daß es eine Kette (43) zur Umwandlung der ursprünglich in geographischen Koordinaten erfaßten Objekte (84) aufweist, so daß ihnen die universellen Koordinaten zugeordnet werden.

7. System nach Anspruch 5 oder 6, dadurch gekennzeichnet, daß die Umwandlungskette (42, 43) einen Modul (81, 85) zur Überprüfung der Kohärenz der ursprünglichen Koordinaten des Objekts (48, 84) bzw. des Kartenuntergrunds (49) enthält.

8. System nach Anspruch 1, dadurch gekennzeichnet, daß die Mittel (45) zur Steuerung der Anzeige der Punkte geeignete Mittel zur Auswahl eines Kartenuntergrunds und eines Darstellungssystems mit kartesischen Koordinaten UTM aufweisen.

9. System nach Anspruch 1, dadurch gekennzeichnet, daß die Mittel zur Umwandlung der universellen Koordinaten jedes Objekts in die kartesischen Koordinaten des Kartenuntergrunds zur Anzeige folgende Elemente aufweisen:
   - Mittel (87) zur Umwandlung der universellen Koordinaten in die kartesischen Koordinaten des Kartenuntergrunds,
   - Mittel (88) zur Berechnung der Referenzen des Objekts im konventionellen Schachbrettraster des Kartenuntergrunds,
   - Mittel (89) zur Berechnung der Koordinaten des Objekts auf dem Anzeigebildschirm.

10. System nach Anspruch 9, dadurch gekennzeichnet, daß die Mittel (87) zur Umwandlung der universellen Koordinaten jedes Punkts in die kartesischen Koordinaten der Anzeige des geeigneten Kartenuntergrunds Mittel zur Überprüfung der Kohärenz der Koordinaten des Objekts mit dem Kartenuntergrund aufweisen.

11. System nach Anspruch 1, dadurch gekennzeichnet, daß Mittel zur Überprüfung der Zugehörigkeit eines Objekts zum dargestellten Kartenuntergrund vorgesehen sind, die Mittel zur Identifizierung der Hemisphäre und/oder des Sphäroids und/oder des linsenförmigen Bereichs aufweisen, zu denen jeder der beiden Punkte gehören.

12. System nach Anspruch 11, dadurch gekennzeichnet, daß die Überprüfungsmittel mit Mitteln zur Berechnung der kartesischen Koordinaten jedes der Punkte in seinem zugehörigen linsenförmigen Bereich ausgehend von den universellen Koordinaten des Punkts zusammenwirken.

## Claims

1. Universal map display system, of the type intended to allow in particular the depiction of an object tagged in any manner on the Earth's surface, on a corresponding map background, the said depiction being carried out for example on a cathode-ray screen, the said system including means (44) for storing map backgrounds, and characterized in that it includes:
   - means (42, 43) for assigning a UTM universal tag to each of the said tagged objects;
   - means (45) for initializing the display of the said points superimposed on an appropriate map background;
   - means (46) for converting the said UTM universal tag of each of the said points into the characteristic cartesian co-ordinates of the said appropriate depiction map background.

2. System according to Claim 1, characterized in that the said means (44) for storing the said map backgrounds are organized in such a way as to reference each map background by a unique identification, spheroid, hemisphere, a base point in cartesian co-ordinates, and a representation scale.

3. System according to Claim 1, characterized in that the said means (42, 43) for assigning a universal tag to each of the said tagged points are organized in such a way as to associate with each tagged point on the one hand a tag in geographical co-ordinates and on the other hand a tag in UTM cartesian co-ordinates, with hemisphere and spheroid information.

4. System according to one of Claims 1 to 3, characterized in that the map background storage means (44) also comprise sectors for storing the said tagged points furnished with their universal tag.

5. System according to Claim 3, characterized in that it includes a chain (42) for converting the objects (48) and/or the map backgrounds (49) initially tagged in UTM co-ordinates, in such a way as to associate the said universal tag with them.

6. System according to Claim 3, characterized in that it includes a chain (43) for converting the objects (84) tagged initially in geographical co-ordinates, in such a way as to associate with them the said universal tag.

7. System according to Claim 5 or 6, characterized in that the said conversion chain (42, 43) comprises a module (81, 85) for testing the consistency of the initial co-ordinates of the object (48, 84), and of the map background (49) respectively.

8. System according to Claim 1, characterized in that the said means (45) for controlling the display of the said points comprise means for the selection of an appropriate map background and of an appropriate UTM cartesian reference representation system.

9. System according to Claim 1, characterized in that the means for converting the universal tag of each object into the cartesian co-ordinates of the depiction map background comprise:
   - means (87) for converting the universal tag into the said cartesian co-ordinates of the map background;
   - means (88) for calculating the references of the said object in the conventional squaring of the said map background;
   - means (89) for calculating the co-ordinates of the said object in the display screen.

10. System according to Claim 9, characterized in that the said means (87) for converting the said universal tag of each point into cartesian co-ordinates for displaying the appropriate map background comprise means for testing the consistency of the co-ordinates of the object with the map background.

11. System according to Claim 1, characterized in that it comprises means for checking an object's membership of the said depicted map background, the said checking means including means for identifying the hemisphere and/or the spheroid and/or the time-zone of membership of each of the two points.

12. System according to Claim 11, characterized.in that the said checking means co-operate with means for calculating the cartesian co-ordinates of each of the said points in its time-zone of membership, from the said universal tag assigned to the said point.

Fig. 1

Fig. 2

Fig. 3

Fig. 4

EP 0 382 592 B1

Fig. 5

**Fig. 6**

Fig. 7

101 VERIFICATION DE COHERENCE

102 CALCUL DES COORDONNEES CARTESIENNES DIFFERENTIELLES

103 CALCUL DES COORDONNEES CARTESIENNES ABSOLUES

104 VERIFICATION DE L'HEMISPHERE

105 VERIFICATION DES LIMITES UTM

106 VERIFICATION DU FUSEAU

Fig. 8